# EUROPÄISCHE PATENTSCHRIFT

(11) **EP 1 590 681 B1**
(45) Veröffentlichungstag und Bekanntmachung des Hinweises auf die Patenterteilung: **30.03.2011**
(21) Anmeldenummer: 04703387.3
(22) Anmeldetag: 20.01.2004
(51) Int. Cl.: G01S 5/14, G01S 19/48, H04W 64/00

(54) **VERFAHREN UND EINE VORRICHTUNG ZUR BESTIMMUNG DER POSITION EINES FAHRZEUGS**
METHOD AND DEVICE FOR DETERMINING THE POSITION OF A VEHICLE
PROCEDE ET DISPOSITIF POUR DETERMINER LA POSITION D'UN VEHICULE

(30) Priorität: 29.01.2003 DE 10304192
(43) Veröffentlichungstag der Anmeldung: 02.11.2005
(73) Patentinhaber: Volkswagen AG, 38436 Wolfsburg (DE)
(72) Erfinder: GOSS, Stefan, 31137 Hildesheim (DE); LUX, Stefan, 38527 Meine (DE); SCHNIER, Carsten, 38259 Salzgitter (DE)
(74) Vertreter: Patentanwälte Bressel und Partner
(86) Internationale Anmeldenummer: PCT/EP2004/000433
(87) Internationale Veröffentlichungsnummer: WO 2004/068161

(56) Entgegenhaltungen:
- WO-A-00/75682
- WO-A-01/61373
- WO-A-01/71372
- WO-A-02/21478
- US-A1- 2002 132 626

## Beschreibung

Die Erfindung bezieht sich auf ein Verfahren und eine Vorrichtung zur Bestimmung der Position eines Fahrzeugs.

Eine Bestimmung der Position eines Fahrzeugs ist für eine Vielzahl von verschiedenen Anwendungen im Automobilbereich erforderlich, beispielsweise für Zielführungssysteme, Informationsdienste, Notrufsysteme und/oder Pannenrufsysteme.

Dabei ist es bekannt, das Fahrzeug mit einem Endgerät eines Mobilfunknetzes auszubilden. Das Endgerät ist dabei ein fester Bestandteil des Fahrzeugs, beispielsweise eine dauerhaft installierte Autotelefonanlage, und/oder eine mobile Einheit, beispielsweise ein Mobiltelefon.

Zur Bestimmung der Position eines mobilen Endgerätes in einem Mobilfunknetz sind verschiede Verfahren bekannt, beispielsweise aus der DE 101 24 811 A1. Nachteilig für eine Bestimmung der Position eines Fahrzeugs mit den bekannten Verfahren ist, dass hierfür zwischen dem Endgerät -und/oder dem Fahrzeug- und einem Mobilfunkbetreiber Informationen ausgetauscht werden müssen. Die Nutzung für Anwendungen im Fahrzeug führt daher zu einer zusätzlichen Belastung des Mobilfunknetzes. Außerdem fallen für einen Nutzer Kosten für die Übermittlung der Informationen an.

Aus der WO 02/21478 A2 ist ein mobiles Endgerät bekannt, das ein Endgerät für ein Satelliten-Ortungssystem wie beispielsweise GPS oder eine andere Positionsbestimmungseinheit aufweist, wobei periodisch die Position bestimmt wird, wobei die Frequenz abhängig von einer Entfernung zu einem Zielort oder von der Geschwindigkeit des mobilen Endgerätes gewählt wird, um den Energiebedarf zu reduzieren. Weiter ist offenbart, dass für bestimmte Anwendungen wie beispielsweise eine Notruffunktion auf Anfrage die aktuelle Position unmittelbar ermittelt wird.

Aus der US 2002/0132626 A1 ist ein mobiles Endgerät bekannt, mit einem Endgerät eines Funknetz-Ortungssystems und einem Endgerät eines Satelliten-Ortungssystems, wobei eine Position aus einer Kombination beider Ortungssignale ermittelt wird, wobei eine Wichtung der Signale in Abhängigkeit von der Zuverlässigkeit der Signale erfolgt. Aus der WO 01/61373 A1 ist ein Verfahren und eine Vorrichtung zur Bestimmung einer Position eines Fahrzeuges bekannt. Dabei weist die Vorrichtung eine erste Positionsbestimmungseinheit und eine zweite Positionsbestimmungseinheit auf. Dabei wird die Position des Fahrzeuges mittels der ersten Positionsbestimmungseinheit ermittelt. Ist die erste Positionsbestimmungseinheit nicht in der Lage, die Position zu ermitteln, so wird diese abgeschaltet und die Auswertung erfolgt automatisch mittels der zweiten Positionsbestimmungseinheit. Die erste Positionsbestimmungseinheit ist beispielsweise ein GPS-Empfänger eines Satelliten-Ortungssystems und die zweite Positionsbestimmungseinheit ein Endgerät eines Funknetz-Ortungssystems. Dabei kann der Nutzer auswählen, welche Positionsbestimmungseinheit als erste Positionsbestimmungseinheit bevorzugt zur Positionsbestimmung verwendet wird.

Aus der WO 00/75682 A1 ist ein Verfahren und eine Vorrichtung zur Bestimmung der Position eines mobilen Endgerätes bekannt, wobei durch ein Auswahlverfahren eine Positionsbestimmungseinheit aus einer Mehrzahl vorhandener Positionsbestimmungseinheiten ausgewählt wird. Die Positionsbestimmungseinheiten können dabei beispielsweise als Endgerät eines Satelliten-Ortungssystems und als Endgerät eines Funknetz-Ortungssystems ausgebildet sein. Das Auswahlverfahren berücksichtigt dabei mindestens einen Parameter wie beispielsweise Verfügbarkeit, Kosten, Geschwindigkeit, Energieverbrauch oder Qualität der Ortung. Dabei ist weiter vorgesehen, dass neben der automatischen Auswahl der Nutzer manuell eine Positionsbestimmungseinheit auswählen kann.

Der Erfindung liegt daher das technische Problem zugrunde, ein Verfahren und eine Vorrichtung zur Positionsbestimmung zu schaffen, durch welche eine hohe Verfügbarkeit der Positionsdaten unter Berücksichtigung der Kosten ereichbar ist.

Die Lösung des Problems ergibt sich durch die Gegenstände mit den Merkmalen der Patentansprüche 1 und 2. Weitere vorteilhafte Ausgestaltungen der Erfindung ergeben sich aus den Unteransprüchen.

Hierzu umfasst die Vorrichtung zur Bestimmung einer Position eines Fahrzeugs mindestens ein Endgerät (12) eines Funknetz-Ortungssystems, mindestens ein Endgerät (13) eines Satelliten-Ortungssystems und eine Recheneinheit (11), wobei mittels des Endgeräts (13) des Satelliten-Ortungssystems ein Positionssignal ermittelt wird, das an die Recheneinheit (11) übertragen wird, wobei bei einem Abriss des Empfangssignals des Satelliten-Ortungssystems und/oder bei einer nicht ausreichenden Positioniergenauigkeit der Satelliten-Ortung bei sicherheitskritischen Anwendungen automatisch die Positionssignale der Funknetz-Ortung erfasst und an die Recheneinheit (11) übertragen werden, wobei bei einer nicht sicherheitskritischen Anwendung dem Nutzer eine Anfrage gestellt wird, ob eine Erfassung der Positionsdaten mittels Funknetz-Ortung gewünscht ist, wobei die Frequenz der Funknetz-Ortung aufgrund der Anwendung festgelegt und/oder durch den Nutzer wählbar ist.

Die Erfindung wird nachfolgend anhand eines bevorzugten Ausführungsbeispiels näher erläutert. Die einzige Figur zeigt schematisch ein Fahrzeug, umfassend eine Vorrichtung zur Bestimmung der Position.

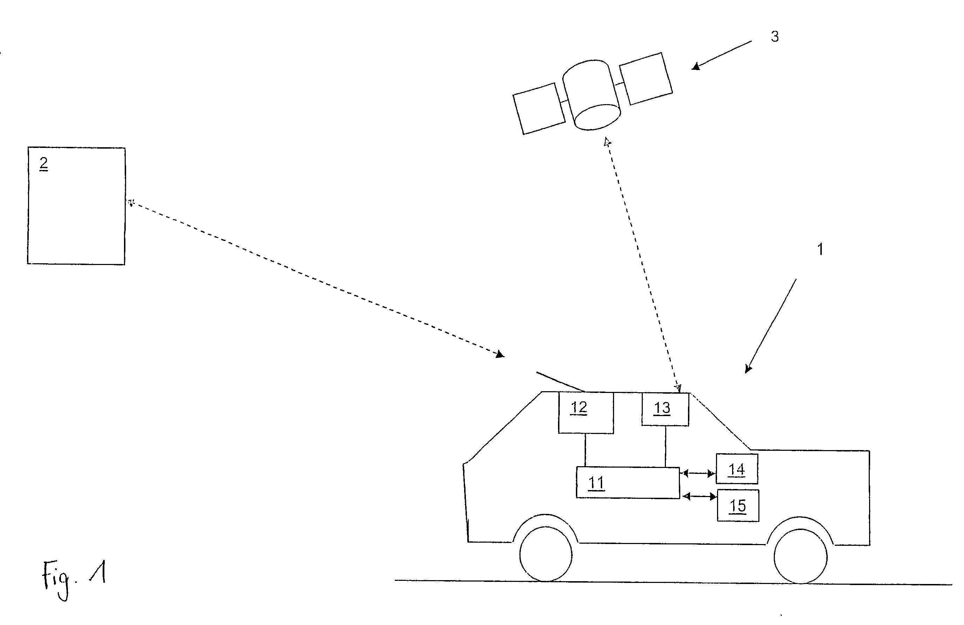

In Fig. 1 ist ein Fahrzeug 1 dargestellt, umfassend Anwendungen 14, 15. Für verschiedene Anwendungen 14, 15 im Fahrzeug 1 ist eine Bestimmung einer Position des Fahrzeugs 1 erforderlich. Die Position des Fahrzeugs 1 ist dabei durch ein Funknetz-Ortungssystem 2 und/oder durch ein Satelliten-Ortungssystem 3 ermittelbar.

Das Fahrzeug ist hierfür mit einer Recheneinheit 11, einem Endgerät 12 des Funknetz-Ortungssystems 2 und einem Endgerät 13 des Satelliten-Ortungssystems 3 ausgebildet. Die Anordnung der Endgeräte 12, 13 und der Recheneinheit 11 im Fahrzeug 1 ist dabei beispielhaft zu verstehen und spiegelt nicht zwangsweise die Position im Fahrzeug 1 wider.

Ist das Endgerät 12 eingeschaltet, so wird durch das Funknetz-Ortungssystem 2 ermittelt, in welcher Funkzelle sich das Endgerät 12 befindet. Die geografische Lage jeder Funkzelle ist bekannt. Daraus können Informationen über die Position des Fahrzeugs 1 abgeleitet und an die Recheneinheit 11 des Fahrzeugs übermittelt werden. Im einfachsten Fall wird beispielsweise als Position des Fahrzeugs 1 die geometrische Mitte der ermittelten Funkzelle angenommen. Die Qualität der bestimmten Position ist von der Größe der Funkzelle abhängig. In stark verbauten Gebieten sind die Funkzellen im allgemeinen sehr klein, so dass dort eine gute Positionsbestimmung mittels Funknetz-Ortungssystem möglich ist. In ländlichen Gebieten ist die Genauigkeit jedoch vielfach nicht ausreichend. Die Übermittlung der Positionsinformationen erfolgt im Regelfall kostenbehaftet durch einen Betreiber des Mobilfunknetzes. Dem Nutzer wird es daher vorzugsweise bei vielen Anwendungen 14, 15 freigestellt, ob und wie häufig Positionsinformationen verwendet werden sollen. Die Einstellung durch den Nutzer erfolgt beispielsweise über ein Benutzerinterface.

Anwendungen 14, 15, welche Positionsdaten benötigen, lassen sich in zwei Gruppen unterteilen. Die erste Gruppe wird von Anwendungen gebildet, welche kontinuierlich Informationen benötigen. Hierzu gehören Navigationssysteme, sowie eine Vielzahl sicherheitsrelevanter Systeme, welche den autonomen Betrieb eines Fahrzeugs betreffen. Die zweite Gruppe wird von Anwendungen gebildet, welche nur in seltenen Situationen eine Information über die Position des Fahrzeugs 1 benötigen. Beispielsweise ein automatischer Notruf und/oder ein Pannenruf an eine Servicezentrale.

Um die Kosten für den Nutzer gering zu halten sowie um eine Belastung des Mobilfunknetzes durch Übermittlung von Daten zu reduzieren, wird jeder Gruppe an Anwendungen eine Betriebsart zugeordnet. Für Anwendungen der ersten Gruppe wird mittels Funknetz-Ortung periodisch ein Signal ermittelt. Die zugehörige Frequenz ist dabei durch einen Nutzer wählbar. Bei sicherheitskritischen Anwendungen ist es jedoch denkbar, einen Einfluss des Nutzers zu beschränken, um die Funktionalität der Anwendung zu gewährleisten. Für Anwendungen der zweiten Gruppe wird die Position des Fahrzeugs 1 auf Abruf ermittelt. Der Abruf ist dabei durch den Nutzer generierbar, beispielsweise über eine geeignete Oberfläche, und/oder automatisch durch das System, beispielsweise ein automatischer Notruf.

Die mit dem Satelliten-Ortungssystem 2 ermittelten Daten werden in der Regel kostenlos einem Nutzer zur Verfügung gestellt. Sie können dem Nutzer daher auch zur Verfügung gestellt werden, ohne dessen ausdrückliche Zustimmung einzuholen. Denkbare Satelliten-Ortungssysteme 2 sind beispielsweise GPS oder "Galileo". In dichtbesiedelten Gebieten ist jedoch teilweise eine Sicht auf Satelliten des Satelliten-Ortungssystems 2 beschränkt. Dies kann dazu führen, dass es zu einem Empfangsabriss kommt und am Fahrzeug 1 keinerlei Positionsinformationen vorliegen. Ist eine freie Sicht auf den Satelliten möglich so liegt eine Positionierungsgenauigkeit typischerweise bei unter 100 Metern.

Für eine Vielzahl von Anwendungen ist die durch Satelliten-Ortung erreichbare Positioniergenauigkeit ausreichend. Bei einer Ausbildung des Fahrzeugs 1 mit einem Endgerät 13 für eine Satelliten-Ortung und einem Endgerät 12 für eine Funknetz-Ortung werden die Positionsdaten vorzugsweise mittels Satelliten-Ortung ermittelt, um keine Kosten beim Nutzer entstehen zu lassen. Bei einem Abriss des Empfangssignals und/oder bei einer nicht ausreichenden Positioniergenauigkeit der Satelliten-Ortung ist eine Erfassung der Positionsdaten mittels der im Regelfall kostenbehafteten Funknetz-Ortung möglich. Die kostenbehaftete Erfassung erfolgt vorzugsweise automatisch, wenn es sich um eine sicherheitskritische Anwendung handelt. Bei einer nicht sicherheitskritischen Anwendung wird vorzugsweise dem Nutzer eine Anfrage gestellt, ob eine Erfassung der Daten mittels Funknetz-Ortung gewünscht ist. Die Frequenz der Funknetz-Ortung ist dabei aufgrund der Anwendung festgelegt und/oder durch den Nutzer wählbar.

Es ist beispielsweise denkbar, dass die einzige Anwendung in einem Fahrzeug, welche Positionsdaten erfordert, ein Zielführungssystem ist. Ein Zielführungssystem benötigt periodisch aktualisierte Positionsdaten. Die Positionsdaten werden vorzugsweise mittels Satelliten-Ortungssystem 3 erfasst. Es ist dem Nutzer jedoch freigestellt, für eine Positionsveredelung zusätzlich eine Positionsbestimmung mittels Funknetz-Ortungssystem 2 durchzuführen. Mittels einer automatischen Anfrage, beispielsweise über ein Benutzerinterface, kann der Nutzer wählen, ob und gegebenenfalls mit welcher Frequenz zusätzliche Positionsdaten über das Funknetz-Ortungssystem 2 ermittelt werden sollen. Vorteilhafterweise erfolgt jedoch über das System eine Überprüfung, ob eine Verbesserung der Daten durch die Funknetz-Ortung überhaupt möglich ist. Ist keine Verbesserung möglich, so kann dem Nutzer ein entsprechender Hinweis übermittelt werden.

Fällt die Qualität der Positionsbestimmung mittels Satelliten-Ortungssystem 3 unter einen wünschenswerten Qualitätsstandard zurück und/oder ist aufgrund eines Empfangsabriss eine Ermittlung von Positionsdaten über das Satelliten-Ortungssystem 3 nicht möglich, so wird der Nutzer vorzugsweise darüber informiert. Dem Nutzer ist es dann freigestellt, ob er auf eine weitere Nutzung des Zielführungssystems verzichten möchte oder notwendige Daten mittels einer im allgemeinen kostenbehafteten Funknetz-Ortung ermittelt werden sollen. Daneben ist es auch denkbar, dass der Nutzer im Vorfeld einen gewünschten Qualitätsstandard festlegt und das System automatisch auf Funknetz-Ortung wechselt, sobald dieser durch Satelliten-Ortung nicht eingehalten wird. Die Frequenz der Funknetz-Ortung wird dabei vorzugsweise ebenfalls automatisch angepasst. Die Anpassung erfolgt beispielsweise derart, dass eine minimale Frequenz ermittelt wird, welche für eine Erfüllung des Qualitätsstandard notwendig ist.

## Patentansprüche

1. Verfahren zur Bestimmung einer Position eines Fahrzeugs mittels mindestens einem Endgerät (12) eines Funknetz-Ortungssystems, mindestens einem Endgerät (13) eines Satelliten-Ortungssystems und einer Recheneinheit (11), wobei mittels des Endgeräts (13) des Satelliten-Ortungssystems ein Positionssignal ermittelt wird, das an die Recheneinheit (11) übertragen wird, wobei bei einem Abriss des Empfangssignals des Satelliten-Ortungssystems und/oder bei einer nicht ausreichenden Positioniergenauigkeit der Satelliten-Ortung bei sicherheitskritischen Anwendungen automatisch die Positionssignale der Funknetz-Ortung erfasst und an die Recheneinheit (11) übertragen werden,
**dadurch gekennzeichnet, dass**
bei einer nicht sicherheitskritischen Anwendung dem Nutzer eine Anfrage gestellt wird, ob eine Erfassung der Positionsdaten mittels Funknetz-Ortung gewünscht ist, wobei die Frequenz der Funknetz-Ortung aufgrund der Anwendung festgelegt und/oder durch den Nutzer wählbar ist.

2. Vorrichtung zur Bestimmung einer Position eines Fahrzeuges, umfassend mindestens ein Endgerät (12) eines Funknetz-Ortungssystems, mindestens ein Endgerät (13) eines Satelliten-Ortungssystems und eine Recheneinheit (11), wobei mittels des Endgeräts (13) des Satelliten-Ortungssystems ein Positionssignal ermittelbar ist, das an die Recheneinheit (11) übertragen wird, wobei bei einem Abriss des Empfangssignals des Satelliten-Ortungssystems und/oder bei einer nicht ausreichenden Positioniergenauigkeit der Satelliten-Ortung bei sicherheitskritischen Anwendungen automatisch die Positionssignale der Funknetz-Ortung erfasst und an die Recheneinheit (11) übertragen werden,
**dadurch gekennzeichnet, dass**
bei einer nicht sicherheitskritischen Anwendung dem Nutzer eine Anfrage gestellt wird, ob eine Erfassung der Positionsdaten mittels Funknetz-Ortung gewünscht ist, wobei die Frequenz der Funknetz-Ortung aufgrund der Anwendung festgelegt und/oder durch den Nutzer wählbar ist.

## Claims

1. Method for determining a position for a vehicle using at least one terminal (12) in a radio network localization system, at least one terminal (13) in a satellite localization system and a computation unit (11), wherein the terminal (13) in the satellite localization system is used to ascertain a position signal which is transmitted to the computation unit (11), wherein loss of the received signal from the satellite localization system and/or inadequate positioning accuracy in the satellite localization in the case of safety-critical applications prompt(s) the position signals from the radio network localization to be automatically captured and transmitted to the computation unit (11),
**characterized in that**
in the case of a non-safety-critical application the user is presented with a query regarding whether capture of the position data by means of radio network localization is desired, wherein the frequency of the radio network localization is stipulated on the basis of the application and/or can be selected by the user.

2. Apparatus for determining a position for a vehicle, comprising at least one terminal (12) in a radio network localization system, at least one terminal (13) in a satellite localization system and a computation unit (11), wherein the terminal (13) in the satellite localization system can be used to ascertain a position signal which is transmitted to the computation unit (11), wherein loss of the received signal from the satellite localization system and/or inadequate positioning accuracy in the satellite localization in the case of safety-critical applications prompt(s) the position signals from the radio network localization to be automatically captured and transmitted to the computation unit (11),
**characterized in that**
in the case of a non-safety-critical application the user is presented with a query regarding whether capture of the position data by means of radio network localization is desired, wherein the frequency of the radio network localization is stipulated on the basis of the application and/or can be selected by the user.

## Revendications

1. Procédé pour déterminer une position d'un véhicule au moyen d'au moins un terminal (12) d'un système de radiolocalisation, d'au moins un terminal (13) d'un système de localisation satellitaire et d'une unité de calcul (11), un signal de position étant déterminé à l'aide du terminal (13) du système de localisation satellitaire, lequel est transmis à l'unité de calcul (11), les signaux de position de la radiolocalisation étant automatiquement détectés et transmis à l'unité de calcul (11) en cas de coupure du signal de réception du système de localisation satellitaire et/ou en cas de précision de position insuffisante de la localisation satellitaire dans le cas d'applications essentielles pour la sécurité, **caractérisé en ce que** dans le cas d'une application non essentielle pour la sécurité, une question est posée à l'utilisateur pour savoir s'il souhaite acquérir les données de position au moyen de la radiolocalisation, la fréquence de la radiolocalisation étant définie en fonction de l'application et/ou pouvant être sélectionnée par l'utilisateur.

2. Dispositif pour déterminer une position d'un véhicule, comprenant au moins un terminal (12) d'un système de radiolocalisation, au moins un terminal (13) d'un système de localisation satellitaire et une unité de calcul (11), un signal de position pouvant être déterminé à l'aide du terminal (13) du système de localisation satellitaire, lequel est transmis à l'unité de calcul (11), les signaux de position de la radiolocalisation étant automatiquement détectés et transmis à l'unité de calcul (11) en cas de coupure du signal de réception du système de localisation satellitaire et/ou en cas de précision de position insuffisante de la localisation satellitaire dans le cas d'applications essentielles pour la sécurité, **caractérisé en ce que** dans le cas d'une application non essentielle pour la sécurité, une question est posée à l'utilisateur pour savoir s'il souhaite acquérir les données de position au moyen de la radiolocalisation, la fréquence de la radiolocalisation étant définie en fonction de l'application et/ou pouvant être sélectionnée par l'utilisateur.
